# EUROPÄISCHE PATENTSCHRIFT

(11) **EP 2 949 985 B1**
(45) Veröffentlichungstag und Bekanntmachung des Hinweises auf die Patenterteilung: **10.05.2017**
(21) Anmeldenummer: 15164469.7
(22) Anmeldetag: 21.04.2015
(51) Int. Cl.: F16M 13/02, A45C 1/00, B62J 99/00

(54) **ELEMENT ZUM BILDEN EINER HALTERUNG**
ELEMENT FOR FORMING A SUPPORT
ÉLÉMENT DESTINÉ À FORMER UN SUPPORT

(30) Priorität: 22.05.2014 DE 202014102396 U
(43) Veröffentlichungstag der Anmeldung: 02.12.2015
(73) Patentinhaber: Adler, Matthias, 22159 Hamburg (DE); La Rive Germany GmbH, 22089 Hamburg (DE)
(72) Erfinder: Claßen, Björn, 22761 Hamburg (DE)
(74) Vertreter: Raffay & Fleck

(56) Entgegenhaltungen:
- US-A1- 2012 091 312
- Anonymous: "Finn. The universal smartphone mount for every bike.", getfinn , 3. Dezember 2013 (2013-12-03), Seite 12PP, XP002746637, Gefunden im Internet: URL:http://getfinn.com/ [gefunden am 2015-10-15]
- tweepy: "Dirt Cheap DIY Smartphone Bike Mount", DotMana , 8. September 2014 (2014-09-08), XP002746638, Gefunden im Internet: URL:http://www.dotmana.com/weblog/2014/09/ dirt-cheap-diy-smartphone-bike-mount/ [gefunden am 2015-10-15]
- CHARLIE SORREL, [Online] 25 September 2013, Gefunden im Internet: <URL:http://www.cultofmac.com/247152/finn-t he-simplest-and-best-iphone-bike-mount-arou nd/> [gefunden am 2016-06-17]

## Beschreibung

Die vorliegende Erfindung betrifft ein Element zum Bilden einer Halterung für einen flachen, rechteckigen Gegenstand, insbesondere für ein Mobiltelefon, für ein Smartphone oder für einen Tablet-Computer.

In der heutigen Zeit führt die Mehrzahl der Menschen wenigstens ein elektronisches Kommunikationsgerät bzw. ein elektronisches Unterhaltungs- oder Unterstützungsgerät die meiste Zeit permanent mit sich. Dies betrifft insbesondere Smartphones, die neben der bloßen Telefonfunktion über weitere Computer-Funktionen verfügen, entsprechende Softwareanwendungen (Apps) abspielen lassen können. Solche Apps können beispielsweise Computerspiele umfassen, Videoanwendungen abspielen, einen Fernsehempfang ermöglichen, Radioempfang gestatten, Navigationsunterstützung geben (nach Art einer Navigations- und Routenführungssoftware) und dgl. Viele Menschen nutzen dafür jedoch nicht allein mobile Telefonendgeräte, Smartphones, sondern verwenden alternativ oder zusätzlich auch Tablet-Computer, die wegen der größeren Bildschirmanzeige für verschiedene Anwendungen geschätzt werden, so z.B. die Wiedergabe von Videos und dgl.

In vielen Situationen ist es für die Anwender wünschenswert, ihr mobiles Kommunikations- bzw. Mediengerät im Blick halten zu können, ohne dies mit den Händen ergreifen und in den Händen halten zu müssen. Zum Beispiel beim Fahrradfahren kann, wenn beispielsweise ein Mobiltelefon mit Navigationsfunktion genützt wird, eine Anbringung eines entsprechenden Smartphones oder anderen elektronischen Mediums an dem Fahrradlenker des verwendeten Fahrrades erwünscht sein. Aber auch in anderen Situationen ist es häufig wünschenswert, ein entsprechendes digitales Endgerät mit einer Halterung versehen festlegen zu können, um dieses im Blick zu haben und zu nutzen, dabei jedoch die Hände frei zu haben für andere Tätigkeiten oder aber auch nur, um nicht permanent und in ermüdender Weise das Gerät hochhalten zu müssen. Beispielsweise kann es wünschenswert sein, am Strand unter einem Sonnenschirm ein entsprechendes Gerät zu verwenden, um ein Video zu schauen, einer Fernsehübertragung zu folgen oder aber, wenn es sich bei dem Gegenstand um einen E-Book-Reader oder ein für das Anzeigen von E-Books taugliches Endgerät handelt, ein digitales Buch zu lesen oder dgl. Hier bietet sich für den Verbraucher dann eine Halterung zum Festlegen des entsprechenden Gerätes an der Stützstange bzw. dem Stützrohr des Sonnenschirmes an. Auch andere Ort einer gewünschten Anbringung sind hier denkbar, z.B. die Raststangen der Kopfstützen von Kraftfahrzeugen, um auf den hinteren Sitzen eines Kraftfahrzeuges befindlichen Personen beispielsweise das Betrachten eines Videofilmes, der auf einem Tablet-Computer angezeigt wird, zu ermöglichen, ohne das entsprechende Gerät in der Hand halten zu müssen.

Um diesem Bedarf zu begegnen sind bereits einzelne, für spezielle Anwendungen vorgesehene Halterungen erdacht und beschrieben worden. So zeigt die DE 20 2012 104 592 U1 eine Halterung für ein mobiles Kommunikationsgerät, welche zur Anordnung an einem Fahrradlenker vorgesehen ist. Diese Halterung ist aus starren Elementen komplex aufgebaut und wird mit schellenartigen Konstruktionen an einem Fahrradlenker festgelegt. Dabei ist der Aufbau der Halterung kompliziert, die Halterung ist insbesondere vielteilig gebildet, was die Halterung teuer in der Herstellung und damit für den Endverbraucher kostspielig im Erwerb gestaltet. Darüber hinaus ist die Befestigung dieser Halterung an einem Fahrradlenker aufwendig, so dass sie nur mit Aufwand und mühsam von einem Anwendungsfall (einem Fahrradlenker) zu einem weiteren umgesetzt werden kann. Zudem ist die dort offenbarte Halterung nicht in einer solchen Weise flexibel, dass sie mit verschiedenen Einrichtungen gleichermaßen wirksam verbunden werden kann. So ist beispielsweise ein Anbringen dieser Halterung an der Stützstange bzw. dem Stützrohr eines Sonnenschirmes nicht vorgesehen, die Halterung für eine derartige Verwendung auch nur allenfalls beschränkt tauglich.

Auch die in der DE 20 2012 008 050 gezeigte Lösung, die eine Smartphone-Tasche mit einem Universalhalter zeigt, bringt hier keine verbesserte Situation. Hierbei ist zudem von Nachteil, dass die Halterung eine Aufbewahrung eines Smartphones in verpackter Form in einer Tasche bedingt, diese Halterung insoweit nicht geeignet ist, ein entsprechendes Gerät, welches in der Halterung aufgenommen ist, zu gebrauchen.

Eine weitere Halterung, diesmal für eine Bedien- und/oder Anzeigeeinheit, ist in der DE 10 2013 016 045 A1 offenbart. Auch hier ist die Halterung starr aufgebaut und wird mit starren Befestigungselementen, die wiederum schellenartig gebildet sind, an einem Fahrradlenker festgelegt.

Die US 2012 009 1312 offenbart eine schützende Stützvorrichtung für den Einhandbetrieb eines Tablet-Computer o.ä., bestehend aus einem planaren einstückigen Elastomerkörper, der einen zentralen Abschnitt umfasst, von dem ausgehend sich zumindest zwei Endabschnitte erstrecken, wobei jeder Endabschnitt eine Öffnung aufweist, die über die diagonal gegenüberliegenden Ecken des Tablet-Computer o.ä. gespannt werden. Zudem weist die Vorrichtung mindestens eine weitere Öffnung im mittleren Bereich des zentralen Abschnittes als Eingriff für Hand und Finger auf. Eine zusätzliche Fixierungsvorrichtung an einem Fahrradlenker o.ä. ist allerdings nicht vorgesehen.

Das Dokument "Finn, the universal smartphone mount for every bike" (gefunden am 03.12.2013 unter http://getfinn.com) offenbart eine ähnliche Vorrichtung allerdings für eine Fixierung eines Smartphones an einem Fahrradlenker. Hierzu weist die Vorrichtung ein zusätzliches Bauteil auf, das um den Fahrradlenker geschlungen wird und mit diesem eine formschlüssige Verbindung eingeht, um einen ausreichenden Halt zu gewährleisten. Dieses Bauteil ist allerdings nicht flexibel einstellbar auf andere geometrische Formen von zur Befestigung gewünschten Einrichtungen (bspw. Sonnenschirm).

Der Erfinder hat hier den mit dem Stand der Technik verbundenen Nachteil gesehen, dass die vorgeschlagenen und bekannten Halterungen komplex gebildet, mithin kostspielig in der Herstellung und somit im Erwerb für den Verbrauch sind, dass die vorbekannten Halterungen ferner unflexibel sind im Hinblick auf eine variable Auswahl der Gegenstände bzw. Einrichtungen, an denen diese festgelegt werden können und auch im Hinblick auf ein schnelles Aufrüsten bzw. Abrüsten der Halterung. Darüber hinaus besteht, auch dies hat der Erfinder erkannt, bei den Halterungen, wie sie aus dem Stand der Technik bekannt sind, die Einschränkung, dass diese jeweils nur für ein bestimmtes Gerät in einem vorgegebenen Format geeignet sind.

Entsprechend hat es sich der Erfinder zur Aufgabe gemacht, hier die Möglichkeit zu geben, eine Halterung mit einfachen und kostengünstig erhältlichen Mitteln zu bilden, die flexibel und schnell an ganz unterschiedlichen Gegenständen festgelegt werden kann und die zudem die Aufnahme von unterschiedlichen, verschieden dimensionierten flachen, rechteckigen Gegenständen, insbesondere Mobiltelefonen, Smartphones oder Tablet-Computern, ermöglicht.

Zur Lösung dieser Aufgabe hat der Erfinder ein Element zum Bilden einer Halterung für einen flachen, rechteckigen Gegenstand, insbesondere für ein Mobiltelefon, für ein Smartphone oder für einen Tablet-Computer entwickelt, wie es in Patentanspruch 1 definiert ist. Vorteilhafte Weiterbildungen des erfindungsgemäßen Elementes sind in den Ansprüchen 2 bis 10 bezeichnet.

Das erfindungsgemäße Element zum Bilden einer Halterung für einen flachen, rechteckigen Gegenstand, insbesondere für ein Mobiltelefon, für ein Smartphone oder für einen Tablet-Computer, ist denkbar einfach aufgebaut. Es weist als wesentliches Element ein flaches, ebenes Spannelement aus einem elastischen Material auf. Dabei kann dieses Spannelement vorzugsweise aus Gummi bestehen, da Gummi einerseits ein hohes Maß an Elastizität, andererseits eine sehr gute Haltbarkeit mit sich bringt. Das Spannelement hat erfindungsgemäß einen zentralen, sich in einer Längsrichtung des Spannelementes erstreckenden Mittelabschnitt. An diesem Mittelabschnitt schließen sich, jeweils an einander in der Längsrichtung gegenüberliegenden Enden, die diesen Mittelabschnitt begrenzen, Verbindungsabschnitte, also ein erster Verbindungsabschnitt auf einer ersten Seite des Mittelabschnittes und ein zweiter Verbindungsabschnitt auf einer zweiten, der ersten Seite in Längsrichtung gegenüberliegenden Seite des Mittelabschnittes, an. Weiterhin erfindungsgemäß sind in dem ersten und in dem zweiten Verbindungsabschnitt jeweils quer zu der Längsrichtung zueinander beabstandet zwei Öffnungen angeordnet. D.h., dass das Spannelement insgesamt vier derartige Öffnungen aufweist, jeweils zwei in jedem der beiden Verbindungsabschnitte. Schließlich ist eine sich parallel zu der Ebene des Spannelementes öffnende Durchführungsöffnung vorgesehen, durch die jedenfalls einer der Verbindungsabschnitte parallel zu der Längsrichtung des Mittelabschnittes hindurch fädelbar ist. Diese Durchführungsöffnung kann dabei durch Bestandteile bzw. Elemente des Spannelementes selbst gebildet sein, wobei in einem solchen Fall das Spannelement insgesamt und abschließend das Element zum Bilden einer Halterung bildet. Die Durchführungsöffnung kann aber auch durch ein weiteres, an dem Spannelement festgelegtes Element gebildet sein, so dass dann das Spannelement und dieses weitere Element zusammen das Element zum Bilden einer Halterung ausmachen.

Das erfindungsgemäße Element zum Bilden einer Halterung funktioniert dabei denkbar einfach. Mit dem Mittelabschnitt wird das Spannelement um eine Einrichtung, an der der flache, rechteckige Gegenstand festzulegen ist, herumgeführt, z.B. um die Stange eines Fahrradlenkers, um die Stützstange bzw. das Stützrohr eine Sonnenschirmes, um die Raststange einer Kopfstütze eines Kraftfahrzeuges oder dgl. Sodann wird einer der Verbindungsabschnitte durch die Durchführungsöffnung gefädelt, so dass nun das Spannelement mit dem Mittelabschnitt die Einrichtung, an dem der flache, rechteckige Gegenstand festzulegen ist, umspannt eine und durch die Durchführungsöffnung geschlossene Öse gebildet ist. Nun werden nach außen stehende Ränder der Öffnungen in den Verbindungsabschnitten nach innen durch die Öffnungen hindurchgeführt und über die jeweiligen Ecken des rechteckigen Gegenstandes gefädelt, so dass dieser Gegenstand mit einer Rückseite auf dem sonstigen Spannelement und auf der Umrandung der Durchführungsöffnung aufliegt, auf der Vorderseite jeweils an den Ecken von einem die Öffnung in den Verbindungsabschnitten begrenzenden Materialstreifen überdeckt und so gehalten ist. Aufgrund der Elastizität des Spannelementes kann dieses in unterschiedlichen Längen eingestellt werden, können die Öffnungen in den Verbindungsabschnitten auf unterschiedliche Weiten gedehnt werden. So können hier verschieden geformte und unterschiedlich große Gegenstände aufgenommen werden, z.B. Smartphones, wie etwa das I-Phone des Anbieters Apple, aber auch Tablet-Computer, wie z.B. ein I-Pad mini des Anbieters Apple. Diese unterschiedlich geformten und verschieden dimensionierten Gegenstände können aufgrund der Elastizität und der Form des Spannelementes mit ein und demselben Element zum Bilden einer Halterung in der wie oben beschriebenen Weise gehalten und an einer bestehenden Einrichtung, wie z.B. einem Fahrradlenker, einer Schirmstange oder dgl., festgelegt werden. Das erfindungsgemäße Element ist ersichtlich erkennbar einfach aufgebaut und kann aufgrund des flachen Charakters des Spannelementes mit sehr geringem Raumbedarf verstaut und mit sich geführt werden. Im Bedarfsfall, wenn also ein flacher, rechteckiger Gegenstand an einer Einrichtung festzulegen ist, kann in der wie oben beschriebenen Weise mit wenigen Handgriffen eine Halterung gebildet und der Gegenstand in dieser Halterung festgelegt werden. Dabei erfordert das Bilden der Halterung und das Festlegen des flachen, rechteckigen Gegenstandes in derselben insbesondere kein Werkzeug, kann von jedermann mit einfachen und auch ungeübt durchzuführenden Handgriffen sehr schnell ausgeführt werden. Ebenso schnell und einfach ist der Abbau der Halterung, so dass diese, wenn sie nicht mehr benötigt wird, einfach wieder aufgelöst und das erfindungsgemäße Element für eine neuerliche Anwendung wiederum verpackt werden kann.

Wie bereits erwähnt, kann die Durchführungsöffnung in dem Spannelement selbst durch entsprechende strukturelle Ausgestaltungen gebildet sein. Dies kann z.B. und auf einfache Weise dadurch erfolgen, dass in dem Spannelement zwei in der Längsrichtung zueinander versetzt angeordnete, quer zu der Längsrichtung verlaufende, zwischen sich einen Steg belassende Schlitze gebildet sind. Durch Herausziehen des Steges aus der Ebene des Spannelementes ergibt sich dann die Durchführungsöffnung mit der Öffnungsfläche quer zu der Ebene des Spannelementes und der Öffnungsrichtung parallel zu dieser Ebene.

Alternativ kann, wie ebenfalls bereits erwähnt, für die Bildung der Durchführungsöffnung ein weiteres Element vorgesehen sein, insbesondere ein mit dem Spannelement verbundener, quer zu der Längsrichtung ausgerichteter Ring. Unter einem Ring ist hierbei nicht lediglich ein solcher mit kreisförmiger Kontur zu verstehen, vielmehr wird unter einem Ring hier eine solche Struktur verstanden, die ggf. unter Zusammenwirken mit dem Mittelabschnitt in einem geschlossenen, bzw. weitgehend geschlossenen Verlauf eine innere Öffnung umgibt. Insoweit kann der Ring hier auch als Öse aufgefasst werden. Insbesondere ist dieser Ring aus einem starren Material gebildet, wobei hier Kunststoff und insbesondere mit Vorteil Metall in Betracht gezogen sind. Als einfache Lösung kann hier ein Spring- oder Schlüsselring verwendet werden, der z.B. durch zwei quer zu der Längsrichtung einander gegenüberliegend angeordnete Öffnungen in dem Spannelement gefädelt ist. Ein solcher Spring- oder Schlüsselring hat den Vorteil, dass das erfindungsgemäße Element mit einem solchen Ring an einem anderen Gegenstand festgelegt werden kann, so dass dies einfach mitgeführt werden kann. Zum Beispiel ist ein Mitführen an einer entsprechenden Öse oder einem ringförmigen Element einer Tragetasche denkbar, so z.B. einer Tragetasche für ein Tablet-PC. Darüber hinaus hat ein solches Element aus einem starren Material den Vorteil, dass es, wenn der flache, rechteckige Gegenstand ohne eine Verbindung mit einem weiteren Element oder Gegenstand einfach durch Herumführen der Randbereiche der Öffnungen um die vier Ecken des Gegenstandes mit dem Element, genauer mit dem Spannelement verbunden ist, quer zu der Ebene des Spannelementes gestellt werden kann und auf diese Weise wie eine Art Stütze für einen Bilderrahmen als Aufstellhilfe für das aufgestellte Positionieren des flachen, rechteckigen Gegenstandes auf einer ebenen Oberfläche, z.B. auf einer Tischplatte, dienen kann. Hier ergibt sich also eine weitere Funktionalität des erfindungsgemäßen Elementes, wenn es in der wie beschriebenen Weise mit einem starren Ring ausgestattet ist.

Wenngleich unter "rechteckige Gegenstände", für die mit dem erfindungsgemäßen Element eine Halterung gebildet werden kann, auch quadratisch gebildete Gegenstände verstanden werden, werden doch zumeist die Gegenstände mit unterschiedlichen Erstreckungen in einer Längsrichtung und einer Querrichtung, also rechteckig und nicht quadratisch, gebildet sein. Um diesen Umstand Rechnung zu tragen, ist es grundsätzlich wünschenswert, dass das Spannelement in einer ersten Richtung eine längere Erstreckung aufweist als in einer zweiten Richtung. Insbesondere kann dabei diese erste Richtung, in der das Spannelement die längere Erstreckung aufweist, die Längsrichtung sein, die zweite Richtung, in der das Spannelement die geringere Erstreckung aufweist, eine Richtung quer, insbesondere senkrecht dazu, wobei insbesondere diese Richtung diejenige Richtung ist, innerhalb derer die Öffnungen in dem jeweiligen Verbindungsabschnitt zueinander fluchten.

Um den Mittelabschnitt insbesondere in der Längsrichtung besonders gut dehnbar zu erhalten, somit eine weite Spanne möglicher Größenanpassungen zu Gegenständen unterschiedlicher Längserstreckungen vornehmen zu können, ist mit Vorteil der Mittelabschnitt in eine Richtung quer zu der Längsrichtung gesehen von geringerer Ausdehnung als die angrenzenden Verbindungsabschnitte.

Im Besonderen kann das Spannelement eine knochenförmige Außenkontur aufweisen, insbesondere mit einem rechteckigen, länglichen Mittelbereich und jeweils an den Enden angeordneten zwei teilkreisförmigen, sich sowohl in Längsrichtung als auch seitlich erstreckenden Fortsätzen, wobei deren Mittelpunkte insbesondere auf einer winkelhalbierenden, durch die jeweilige Ecke des Mittelbereichs und insbesondere außerhalb des rechteckigen Mittelbereichs liegen. Wie nachfolgend beschrieben können weitere Abrundungen oder geschwungene Übergänge an sich ergebenen Ecken ausgebildet werden. Diese hat sich nicht nur hinsichtlich der Funktionalität besonders bewährt, sondern gibt zudem noch ein ansprechendes Aussehen.

Wie bereits erwähnt, wird das Spannelement für eine entsprechende Anpassung an und für die Verwendung als Halterung für verschieden dimensionierte flache, rechteckige Gegenstände, häufig stark gedehnt werden. Um hierbei zu verhindern, dass an kantenförmigen und scharfen, winkeligen Übergängen die Gefahr von Rissbildungen besteht, ist das Spannelement vorzugsweise an den Konturlinien frei von kantig, winkelig geformten Übergängen und weist stattdessen lediglich solche Übergänge der Konturlinien auf, die mit Radien gerundet geführt sind. Die entsprechenden Radien betragen mit Vorteil mindestens 3,0 mm, insbesondere mindestens 3,5 mm.

Weiterhin ist, aufgrund ähnlicher Überlegungen einerseits (Verhinderung von Belastungen an Kanten oder auch verjüngten Radien), andererseits für die gute Aufnahmefähigkeit der Ecken des Gegenstandes, die Form der insgesamt vier Öffnungen in den beiden Verbindungsabschnitten mit Vorteil eine Kreisform. Insbesondere haben diese kreisförmigen Öffnungen dabei einen einheitlich gleichen Durchmesser. Dabei sind die kreisförmigen Öffnungen, insbesondere bei einer knochenförmigen Außenkontur, insbesondere konzentrisch zu den teilkreisförmigen Fortsätzen angeordnet.

Schließlich besteht ein weiterer und aus Sicht des Erfinders wesentlicher und erheblicher Vorteil der Erfindung darin, dass es möglich ist, das Spannelement als Stanz- oder Schnittteil aus dem Gummimaterial alter Fahrzeugradschläuche, insbesondere alter Traktor- und Lkw-Radschläuche zu bilden. Auf diese Weise wird im Wege des Recyclings aus einem kostengünstig zu erhaltenden, ansonsten der klassischen Entsorgung anheimfallenden Material erneut ein werthaltiger Gebrauchsgegenstand geschaffen. Neben einer kostengünstigen Herstellung (auch Stanzformen sind vergleichsweise günstige Formwerkzeuge) wird so auch noch ein Recyclingeffekt und damit ein Effekt der Reduzierung von Umweltbelastungen erreicht.

Weitere Vorteile und Merkmale der Erfindung ergeben sich aus der nachfolgenden Beschreibung von Ausführungsbeispielen anhand der beigefügten Figuren. Dabei zeigen:
- Fig. 1: eine Aufsicht auf ein erstes Ausführungsbeispiel für ein erfindungsgemäßes Element zum Bilden einer Halterung für einen flachen, in der Grundform rechteckigen Gegenstand;
- Fig. 2: eine Aufsicht auf ein erfindungsgemäßes Element zum Bilden einer Halterung für einen flachen, in der Grundform rechteckigen Gegenstand gemäß einem zweiten Ausführungsbeispiel;
- Fig. 3: die Darstellung des Spannelementes des Elementes zum Bilden einer Halterung für einen flachen, in der Grundform rechteckigen Gegenstand nach dem Ausführungsbeispiel gemäß Fig. 2; und
- Fig. 4: in Darstellungen a bis d schrittweise das Vorgehen, um mit einem erfindungsgemäßen Element zum Bilden einer Halterung für einen flachen, in der Grundform rechteckigen Gegenstand gemäß dem Ausführungsbeispiel nach Fig. 2 eine solche Halterung zu bilden, wobei in den Figuren 3c und 3d schematisch ein in der Halterung aufgenommener flacher, in der Grundform rechteckiger Gegenstand gezeigt ist, bei dem es sich hier insbesondere um ein Smartphone handelt.

Die Figuren sind dabei als schematische Darstellungen zu verstehen, sie zeigen lediglich mögliche Ausführungsbeispiele der Erfindung in nicht maßstabsgerechter Veranschaulichung und dienen der Erläuterung in Zusammenhang mit den nachstehenden textlichen Ausführungen hierzu.

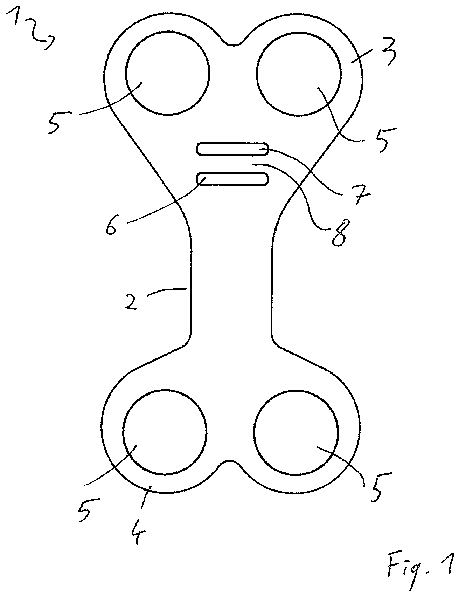

Ein erstes Ausführungsbeispiel eines erfindungsgemäßen Elementes 1 zum Bilden einer Halterung für einen flachen, in der Grundform rechteckigen Gegenstand ist in Fig. 1 in einer Aufsicht gezeigt. Das Element 1 ist in seiner Außenkontur im Wesentlichen knochenförmig gestaltet und setzt sich zusammen aus einem sich in einer Längsrichtung erstreckenden Mittelabschnitt 2 und zwei sich in Richtung der Längsrichtung endseitig an den Mittelabschnitt 2 anschließenden Verbindungsabschnitten 3, 4. In den Verbindungsabschnitten sind zueinander in einer Richtung quer, insbesondere senkrecht zu der Längsrichtung beabstandete und nebeneinander angeordnete Öffnungen 5 gebildet, die kreisförmig ausgestaltet sind und das Material des Elementes 1 vollständig durchdringen. Erkennbar ist ferner, dass in einem Übergangsbereich zwischen dem Mittelabschnitt 2 und dem Verbindungsabschnitt 3 zwei quer zu der Längserstreckung verlaufende, parallel zueinander angeordnete Längsschlitze 6, 7 gebildet sind, zwischen denen ein Steg 8 verblieben ist.

Das Element 1 ist insgesamt aus einem flachen, elastischen Material geformt, insbesondere aus einem flachen Gummimaterial gestanzt oder geschnitten. Bei dem Gummimaterial kann es sich insbesondere um Recyclingmaterial aus alten Fahrzeugradschläuchen, wie etwa alten Traktorradschläuchen bzw. Lkw-Radschläuchen, handeln.

In dem hier gezeigten Ausführungsbeispiel ist das Element insgesamt einstückig gebildet, wobei ein Spannelement im Wesentlichen aus den Abschnitten Mittelabschnitt 2 und Verbindungsabschnitten 3, 4 gebildet ist, eine Durchführungsöffnung sich gestaltet durch den zwischen den Längsschlitzen 6, 7 bestehenden Steg 8, wenn dieser aus der Zeichenebene herausgezogen wird und somit eine Art ringförmige Begrenzung einer mit einer Durchstoßrichtung parallel zu der sonstigen Erstreckung des Elementes 1 gebildete Durchführungsöffnung ausmacht.

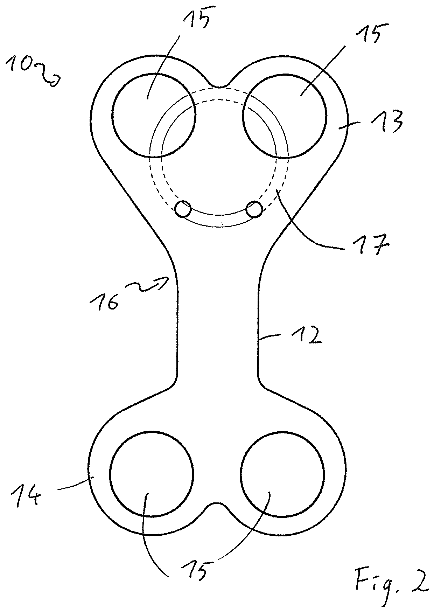

In Fig. 2 ist ein zweites Ausführungsbeispiel für ein Element zum Bilden einer Halterung für einen flachen, in der Grundform rechteckigen Gegenstand in einer Aufsicht dargestellt und mit dem Bezugszeichen 10 bezeichnet. In der Grundform gleicht dieses Element 10 dem Element 1. Auch hier ist ein Mittelabschnitt 12 gegeben, der sich in einer Längsrichtung erstreckt und endseitig in dieser Längsrichtung gesehen von zwei einander gegenüberliegenden Verbindungsabschnitten 13, 14 begrenzt ist. In den Verbindungsabschnitten sind wiederum jeweils zwei, für das gesamte Element 10 mithin vier, Öffnungen 15 gebildet, die ebenfalls wiederum kreisförmig und für alle vier Öffnungen mit gleichem Durchmesser bzw. Radius versehen gestaltet sind. Im Unterschied zu dem Element 1 nach dem Ausführungsbeispiel gemäß Fig. 1 ist das Element 10 allerdings nicht einstückig, sondern aus zwei unterschiedlichen Bestandteilen gebildet. Das Spannelement 16 ist, wie das gesamte Element 1 gemäß Fig. 1 wiederum durch Stanzen oder Schneiden aus einem flachen Gummimaterial gebildet, auch hier wiederum mit Vorteil und bevorzugt aus alten und recycelten Fahrzeugradschläuchen. An dem Spannelement 16 ist in etwa an einer Position, in der bei dem Element 1 gemäß Fig. 1 der Steg 8 herausgetrennt ist, ein Ring 17 festgelegt, bei dem es sich hier um einen Spring- bzw. Schlüsselring handelt. Dieser definiert eine mit ihrer Öffnungsebene quer zur Ausrichtung der Fläche des Spannelementes 16 bzw. mit seiner Durchführungsrichtung im Wesentlichen parallel hierzu gelegene Durchtrittsöffnung, wenn der Ring 17 senkrecht zur Zeichenebene gestellt wird. In der Fig. 2 ist er jedoch abgeklappt, parallel zur Zeichenebene dargestellt.

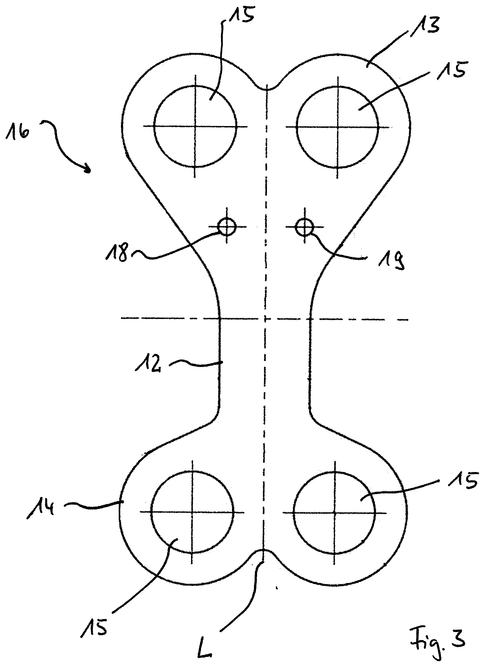

In Fig. 3 ist in einer der Fig. 2 vergleichbaren Darstellung noch einmal lediglich das Spannelement 16 des dort gezeigten Elementes 10 dargestellt, d.h. ohne den Ring 17. Zu erkennen ist hier einmal die mit L bezeichnete, eingezeichnete Längsachse, die die Längsrichtung definiert, entlang derer eine längere Erstreckung des Spannelementes 16 und somit auch des Elementes 10 insgesamt gegeben ist. Ferner sind zwei Öffnungen 18, 19 im Bereich des Überganges zwischen dem Mittelabschnitt 12 und dem in der Figur oben dargestellten Verbindungsabschnitt 13 zu erkennen. Durch diese Öffnungen 18, 19 ist der Ring 17 hindurchgefädelt, der dann die Durchtrittsöffnung bereitstellt und das Element 10 komplettiert.

Zu erkennen ist insbesondere in der Fig. 3 auch, dass die Konturenführung der Außenkonturen des Spannelementes 16 im Wesentlichen einer Knochenform folgt und dass diese Ferner ohne scharfe Winkel, sondern in allen Übergängen mit großzügig bemessenen Radien vorgesehen ist. Diese Ausgestaltung, die im Übrigen auch auf das gezeigte Ausführungsbeispiel gemäß Fig. 1, welches eine im Wesentlichen identische Grundform aufweist, zutrifft, sorgt dafür, dass bei Zugbelastungen, die auf das Spannelement 16 aufgebracht werden, das Gummimaterial nicht etwa an scharfkantigen Übergängen einzureißen droht.

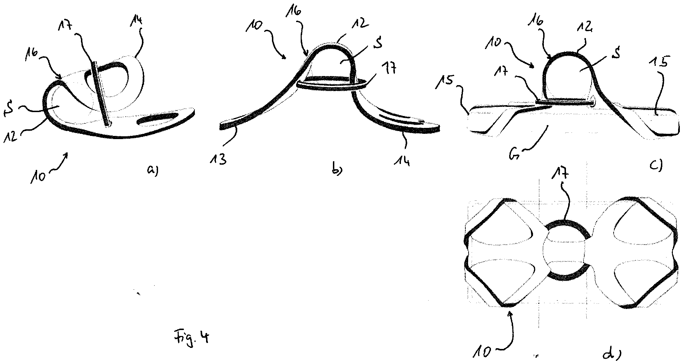

In Fig. 4 ist in einer Abfolge a bis d dargestellt, wie mit dem Element 10 eine Halterung für einen in der Grundform rechteckigen, flachen Gegenstand gebildet wird, zum Festlegen desselben an einer externen Struktur. Hier ist dies dargestellt anhand einer im Querschnitt kreisrunden Stange oder eines solchen Rohres, an dem Gegenstand festzulegen ist. Diese Struktur, also hier eine Stange oder Rohr, ist mit S bezeichnet. In einem ersten Schritt, wie er in Fig. 4a skizziert ist, wird das Element 10 mit seinem Mittelabschnitt 12 um die Struktur S, bei der es sich beispielsweise um einen Fahrradlenker, um eine Schirmstange eines Sonnenschirmes oder dgl. handeln kann, herumgelegt. Sodann wird der Verbindungsabschnitt 14 durch den Ring 17 hindurchgefädelt, so dass sich eine geschlossene Schlaufe um die Struktur S herum bildet. Nun können, wie in Fig. 4b dargestellt, die beiden Enden mit den Verbindungsabschnitten 13, 14 seitlich auseinandergezogen werden, womit sich die durch den Mittelabschnitt 12 und den Ring 17 um die Struktur S gebildete Schlaufe schließt. Anschließend werden die Materialränder, die um die Öffnungen 15 verlaufen umgeschlagen und um die jeweils zugeordneten Ecken eines rechteckig gebildeten Gegenstandes G, bei dem es sich hier in der Darstellung beispielsweise um ein Smartphone handelt, herumgeschlagen, um so Halteschlaufen zu bilden. In Fig. 4d ist dies in einer schematischen Ansicht von oben gezeigt, wobei die unterhalb des Gegenstandes gelegenen Strukturen des Elementes 10 zur besseren Verdeutlichung mit dargestellt sind. Insbesondere gut zu erkennen ist hier in Fig. 4c, dass zwischen der empfindlichen Rückseite des in der Halterung aufzunehmenden Gegenstandes und dem hier aus Metall gebildeten Ring 17 auf den den Verbindungsabschnitten 13 bzw. 14 zugewandten Seite jeweils eine Schicht des Spannelementes 16, also hier eine Lage Gummimaterials liegt, so dass die empfindliche Rückseite des Gegenstandes G vor einem Kontakt mit dem Metallring 17 und somit vor einem möglichen Zerkratzen oder einer sonstigen Beschädigung durch den Metallring 17 sicher geschützt ist.

Aus Fig. 4d ist ohne weiteres erkennbar, auf welch einfache Weise die mit dem erfindungsgemäßen Element 10 gebildete Halterung hergestellt werden kann und wie flexibel sich diese um ganz unterschiedliche Strukturen S herumlegen lässt. Sie ist nicht etwa beschränkt auf solche, wie in der Fig. 4 gezeigte Strukturen S mit kreisförmigem Querschnitt. Gleichermaßen kommen hier Strukturen mit ovalem Querschnitt oder eckigem Querschnitt in Betracht. Auch Strukturen S unterschiedlichen Durchmessers bzw. unterschiedlicher Außenabmessungen können hier ohne Probleme einbezogen werden. Dies ist insbesondere möglich, da das Material, aus dem das Spannelement 16 gebildet ist, ausreichend elastisch ist, um hier nicht nur unterschiedlich dimensionierte Strukturen S abzudecken, sondern auch Gegenstände G mit unterschiedlichen Rechteckabmessungen, d.h. unterschiedlichen Längen und Breiten.

Auf ähnliche Weise, wie in Fig. 4 für das Element 10 dargestellt, funktioniert die Gestaltung einer Halterung mit dem Element 1 gemäß Fig. 1. Hier wird nur anstelle des Ringes 17 die durch Herausziehen des Steges 8 an gleicher Position gebildete Schlaufe genutzt, um durch diese den Verbindungsabschnitt 4 hindurchzuführen und so das Element 1 um eine Struktur S herumzulegen. Im Weiteren funktioniert die Aufnahme des Gegenstandes durch Umschlagen der Ränder der Öffnungen 5 in gleicher Weise, wie in Fig. 4 für das Element 10 veranschaulicht.

Schließlich ist hier noch anzumerken, dass das Element gemäß dem zweiten Ausführungsbeispiel, also das Element 10 mit dem daran angeordneten Ring auch in einer alternativen Weise verwendet werden kann. Hier ist es nämlich möglich, einen Aufstellhalter zu bilden, in dem das Element 10 flach an die Rückseite des Gegenstandes G gelegt, die Ränder der Öffnungen 15 entsprechend den Darstellungen der Figuren 4c und 4d um die Ecken des Gegenstandes herum geschlagen werden. Hierbei wird also keiner der Verbindungsabschnitte durch den Ring 17 hindurchgefädelt. Der Ring 17 liegt in dieser Verwendung in der Regel zunächst einmal vergleichsweise flach auf der Rückseite des Gegenstandes G an. Er kann aber nun abgeklappt werden, bis er sich in seiner Öffnungsebene quer, insbesondere Senkrecht zu der Ebene der Rückseite des flachen Gegenstandes erstreckt. Der Ring bleibt dann aufgrund der durch das elastische Material des Spannelementes 16 ausgeübten Kraft in dieser Position und dient als Stütze, ähnlich wie bei einem Aufstellbilderrahmen, so dass der derart in der Halterung aufgenommene flache, rechteckige Gegenstand auf einer Fläche, z.B. einer Tischplatte, in aufrechter Position aufgestellt werden kann. Hierdurch gewinnt das erfindungsgemäße Element in der Ausführungsvariante gemäß den Figuren 2 bis 4 eine weitere Funktionalität.

Anzumerken ist an dieser Stelle noch, dass, wenn in Bezug auf das Ausführungsbeispiel aber auch in Bezug auf die allgemeine Beschreibung von einem in der Grundform rechteckigen Gegenstand gesprochen wird, für den mit dem erfindungsgemäßen Element eine Halterung gebildet werden kann, ein solcher gemeint ist, der zwar vier erkennbare Ecken aufweist, die zueinander rechtwinklig orientierte Kanten begrenzen, dass diese Ecken aber ohne weiteres mehr oder weniger abgerundet sein können, nicht etwa mit einem scharfen rechten Winkel ausgebildet sein müssen. Dies zeigt auch das Ausführungsbeispiel, welches als Gegenstand G hier ein Smartphone mit entsprechend abgerundeten Ecken darstellt.

### Bezugszeichenliste

- 1: Element
- 2: Mittelabschnitt
- 3: Verbindungsabschnitt
- 4: Verbindungsabschnitt
- 5: Öffnung
- 6: Längsschlitz
- 7: Längsschlitz
- 8: Steg
- 10: Element
- 12: Mittelabschnitt
- 13: Verbindungsabschnitt
- 14: Verbindungsabschnitt
- 15: Öffnung
- 16: Spannelement
- 17: Ring
- 18: Öffnung
- 19: Öffnung
- G: Gegenstand
- L: Längsachse
- S: Struktur

## Patentansprüche

1. Element zum Bilden einer Halterung für einen flachen, in der Grundform rechteckigen Gegenstand, insbesondere für ein Mobiltelefon, für ein Smartphone oder für einen Tablet-Computer, mit einem flachen, ebenen Spannelement aus einem elastischen Material, vorzugsweise aus Gummi, wobei das Spannelement einen zentralen, sich in einer Längsrichtung erstreckenden Mittelabschnitt (2) und, den Mittelabschnitt (2) an einander in der Längsrichtung gegenüberliegenden Enden begrenzend, einen ersten (3) und einen zweiten (4) Verbindungsabschnitt aufweist, wobei in dem ersten (3) und in dem zweiten (4) Verbindungsabschnitt jeweils quer zu der Längsrichtung zueinander beabstandet zwei Öffnungen (5) angeordnet sind, **dadurch gekennzeichnet, dass** eine sich parallel zu der Ebene des Spannelementes öffnende oder öffenbare Durchführungsöffnung (6, 7, 8; 17) vorgesehen ist, durch die jedenfalls einer der Verbindungsabschnitte (3, 4) parallel zu der Längsrichtung des Mittelabschnittes hindurchfädelbar ist.

2. Element nach Anspruch 1, **dadurch gekennzeichnet, dass** die Durchführungsöffnung (6, 7, 8) durch zwei in der Längsrichtung zueinander versetzt angeordnete, quer zu der Längsrichtung, insbesondere parallel zueinander, verlaufende, zwischen sich einen Steg (8) belassende Schlitze (6, 7) in dem Spannelemente gebildet ist, wobei sich durch Herausziehen des Steges (8) aus der Ebene des Spannelementes die Durchführungsöffnung (6, 7, 8) ergibt.

3. Element nach Anspruch 1, **gekennzeichnet durch** einen mit dem Spannelement verbundenen, quer zu der Längsrichtung ausgerichteten oder ausrichtbaren Ring (17), vorzugsweise einen solchen aus Metall, insbesondere einen Spreng- oder Schlüsselring, zum Bilden der Durchführungsöffnung.

4. Element nach einem der vorhergehenden Ansprüche, **dadurch gekennzeichnet, dass** das Spannelement in der Längsrichtung eine größere Erstreckung aufweist als quer dazu.

5. Element nach einem der vorhergehenden Ansprüche, **dadurch gekennzeichnet, dass** der Mittelabschnitt (2) in einer Richtung quer zu der Längsrichtung gesehen eine geringere Ausdehnung aufweist als die angrenzenden Verbindungsabschnitte (3, 4).

6. Element nach einem der vorhergehenden Ansprüche, **dadurch gekennzeichnet, dass** das Spannelement eine knochenförmige Außenkontur aufweist.

7. Element nach einem der vorhergehenden Ansprüche, **dadurch gekennzeichnet, dass** das Spannelement an den Konturlinien frei von kantig, winkelig geformten Übergängen ist, dass stattdessen alle Übergänge der Konturlinien mit Radien gerundet geführt sind.

8. Element nach Anspruch 7, **gekennzeichnet durch** Radien von wenigstens mindestens 3,0 mm, insbesondere von wenigstens 3,5 mm.

9. Element nach einem der vorhergehenden Ansprüche, **dadurch gekennzeichnet, dass** die insgesamt vier Öffnungen (5) in den beiden Verbindungsabschnitten (3, 4) kreisförmig gebildet sind.

10. Element nach einem der vorhergehenden Ansprüche, **dadurch gekennzeichnet, dass** das Spannelement als Stanz- oder Schnittteil aus dem Gummimaterial alter Fahrzeugradschläuche, insbesondere alter Traktor- und Lkw-Radschläuche gebildet ist.

## Claims

1. An element to form a holding system for a flat object, generally rectangular in shape, in particular for a mobile phone, for a smart phone or for a tablet computer, with a flat, planar clamping element made of an elastic material, preferably of rubber, whereas the clamping element exhibibts a central, middle section (2) extending in a longitudinal direction and a first connecting portion (3) as well as a second connecting portion (4) delineating the middle section (2) against ends opposite each other in the longitudinal direction, whereas two openings (5) are provided in the first connecting portion (3) and the second connecting portion (4) respectively transversally to the longitudinal direction and mutually spaced apart,
**characterised in that** a passage opening (6, 7, 8; 17) is provided parallel to the plane of the clamping element, said opening becoming open or which can become open, through which opening in all cases one of the connecting parts (3, 4) can be threaded, parallel to the longitudinal direction of the middle section.

2. An element according to claim 1, **characterised in that** the passage opening (6, 7, 8) is formed of two slits (6, 7), staggered to each other in the longitudinal direction, transversally to the longitudinal direction, in particular, parallel to each other, leaving between them a bridge (8), in the clamping element, whereas the passage opening (6, 7, 8) is created by extracting the bridge (8) from the plane of the clamping element.

3. An element according to claim 1, **characterised by** a ring (17)which is arranged or can be arranged transversally to the longitudinal direction, connected with the clamping element, preferably a ring made of metal, in particular a retainer ring or a key ring, to form the passage opening.

4. An element according to any of the preceding claims, **characterised in that** the clamping element exhibits a larger extension in the longitudinal direction than transversally thereto.

5. An element according to any of the preceding claims, **characterised in that** the midle section (2) exhibits, seen in a direction transversally to the longitudinal direction, a smaller elongation than the delineating connecting sections (3, 4).

6. An element according to any of the preceding claims, **characterised in that** the clamping element exhibits a bone-shaped outer contour.

7. An element according to any of the preceding claims, **characterised in that** the clamping element at the contour lines is free from edgy, angular passages, whereas instead all the passages of the contour lines are guided and rounded off with radii.

8. An element according to claim 7, **characterised by** radii of at least 3.0 mm, in particular at least 3.5 mm.

9. An element according to any of the preceding claims, **characterised in that** as a whole the four openings (5) are circular in both connecting sections (3, 4).

10. An element according to any of the preceding claims, **characterised in that** the clamping element is formed as a punched portion or a cut portion made of rubber material of tubes of old vehicle quality, in particular old tractor wheel tubes or old truck wheel tubes.

## Revendications

1. Elément pour former un système de maintien d'un objet plat, généralement de forme rectangulaire, en particulier pour téléphone mobile, smart phone ou tablette, pourvu d'un élément de fixation plat, plan en un matériau élastique, de préférence caoutchouc, où l'élément de fixation présente une section médiane centrale (2) s'étendant dans une direction longitudinale et une première partie de connexion (3) de même qu'une deuxième partie de connexion (4) délimitant la section médiane (2) contre des extrémités opposées dans la direction longitudinale, où deux ouvertures (5) sont prévues dans la première partie de connexion (3) et la seconde partie de connexion (4), respectivement, transversalement à la direction longitudinale et mutuellement espacées,
**caractérisé en ce qu'**une ouverture de passage (6, 7, 8; 17) est prévue parallèlement au plan de l'élément de fixation, ladite ouverture s'ouvrant ou pouvant s'ouvrir, à travers laquelle, dans tous les cas, l'une des parties de connexion (3, 4) peut être filetée, parallèlement à la direction longitudinale de la section médiane.

2. Elément selon la revendication 1, **caractérisé en ce que** l'ouverture de passage (6, 7, 8) est formée de deux fentes (6, 7) décalées l'une par rapport à l'autre dans la direction longitudinale, transversalement à la direction longitudinale, notamment parallèle entre eux, laissant entre eux un pont (8), dans l'élément de fixation, tandis que l'ouverture de passage (6, 7, 8) est créée par l'extraction du pont (8) à partir du plan de l'élément de fixation.

3. Elément selon la revendication 1, **caractérisé par** une bague (17) disposée ou pouvant être disposée transversalement à la direction longitudinale, reliée à l'élément de fixation, de préférence une bague en métal, notamment un anneau de retenue ou un porte-clés, pour former l'ouverture de passage.

4. Elément selon l'une quelconque des revendications précédentes, **caractérisé en ce que** l'élément de fixation présente une plus grande extension dans la direction longitudinale que dans la direction transversale.

5. Elément selon l'une quelconque des revendications précédentes, **caractérisé en ce que** la section médiane (2) présente, vu dans une direction transversale à la direction longitudinale, une extension plus petite que les sections de connexion de délimitation (3, 4).

6. Elément selon l'une quelconque des revendications précédentes, **caractérisé en ce que** l'élément de fixation présente un contour extérieur en forme d'os.

7. Elément selon l'une quelconque des revendications précédentes, **caractérisé en ce que** l'élément de fixation au niveau des lignes de contour, est exempt de passages angulaires pointus, tandis qu'au lieu de cela, tous les passages des lignes de contour sont guidés et arrondis, avec des rayons.

8. Elément selon la revendication 7, **caractérisé par** des rayons d'au moins 3,0 mm, en particulier d'au moins 3,5 mm.

9. Elément selon l'une quelconque des revendications précédentes, **caractérisé en ce que**, dans l'ensemble, les quatre ouvertures (5) sont circulaires dans les deux sections de connexion (3, 4).

10. Elément selon l'une quelconque des revendications précédentes, **caractérisé en ce que** l'élément de fixation est réalisé sous forme d'une partie perforée ou une partie découpée en matériau de tubes en caoutchouc de vieux véhicules, en particulier de vieux tubes de roues de tracteur ou de vieux tubes de roues de camion.
